# EUROPEAN PATENT SPECIFICATION

(11) **EP 3 282 826 B1**
(45) Date of publication and mention of the grant of the patent: **07.10.2020**
(21) Application number: 15716789.1
(22) Date of filing: 15.04.2015
(51) Int. Cl.: A01D 34/74

(54) **LAWN MOWER CUTTING HEIGHT ADJUSTMENT ASSEMBLY**
SCHNITTHÖHENEINSTELLUNG FÜR RASENMÄHER
RÉGLAGE DE HAUTEUR DE COUPE POUR TONDEUSE

(43) Date of publication of application: 21.02.2018
(73) Proprietor: Husqvarna AB, 561 82 Huskvarna (SE)
(72) Inventor: STRAZZERI, Sandro, 89073 Ulm (DE); MACK, Tobias, 89081 Ulm (DE)
(86) International application number: PCT/EP2015/058163
(87) International publication number: WO 2016/165755

(56) References cited:
- CN-U- 201 509 441
- FR-A1- 2 814 323
- GB-A- 2 325 139
- GB-A- 2 495 577

## Description

### TECHNICAL FIELD

Example embodiments generally relate to outdoor power equipment and, more particularly, relate to a walk behind lawn mower with an ability to easily adjust cutting height.

### BACKGROUND

Yard maintenance tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically relatively compact, have comparatively small engines and are relatively inexpensive. Meanwhile, at the other end of the spectrum, riding lawn mowers, such as lawn tractors, can be quite large.

Walk behind models are often used when smaller lots or tighter areas are to be mowed. Some, relatively simple walk behind models may move responsive only to the pushing force provided by the operator. However, other models may provide power to the wheels to assist the operator relative to providing mobility for the lawn mower. In either case, the operator typically controls the lawn mower and/or pushes the lawn mower via a handle assembly that extends rearward and upward behind the lawn mower to allow the operator to engage the handle assembly while walking behind the lawn mower.

Walk behind models typically provide a rotating blade within a cutting deck that may have an adjustable height to allow the length at which the grass is cut to be controlled. The adjustment of cutting height is typically controlled by manually adjusting an adjustment assembly that allows height of the cutting deck relative to each wheel to be individually adjusted. In other examples, the wheel axle itself may be adjusted or some form of central adjustment may be attempted. Although effective, such mechanisms can be tedious to adjust, and it is also possible that the operator may unwittingly make adjustments that result in uneven cutting for some such mechanisms. Accordingly, it may be desirable to provide an improved cutting height adjustment mechanism and/or method.

FR2814323A1 suggests a height adjustment arrangement comprising curved levers which are attached to eccentric disks mounted on the axles of the wheels. A threaded bar pushes against the levers for changing the height.

GB2495577 A shows a height-adjusting equipment for adjusting the cutting height of a lawnmower. The height-adjusting equipment has an axle that has a motion trace of arc shape and could be used for adjusting the height of the cutter relative to the deck.

### BRIEF SUMMARY OF SOME EXAMPLES

Some example embodiments may therefore provide for improved lawn mower design by providing a cutting height adjustment assembly that can be operated simply and intuitively. For example, some embodiments provide a single adjustment mechanism that can be easily operated to change the cutting height by making an adjustment to the height of the cutting deck relative to each of the wheels. The single adjustment mechanism can be operated with one hand and consistently adjust all four wheel heights simultaneously. Some example embodiments provide for improving the operator experience relative to the ease of use and convenience associated with adjusting cutting height of the lawn mower and overall operability of the lawn mower.

In an example embodiment, a lawn mower is provided. The lawn mower include a blade housing configured to house at least one blade, a motor configured to selectively rotate the at least one blade within the blade housing, a mobility assembly including front wheels supported at least in part via a front axle and rear wheels supported at least in part via a rear axle, and a cutting height adjustment assembly configured to convert linear movement of a linking member that is operably coupled between the front axle and the rear axle into a height adjustment of the blade housing.

In another example embodiment, a cutting height adjustment assembly for a lawn mower is provided. The cutting height adjustment assembly include a first pivot member, a second pivot member and an adjusting member. The first pivot member is operably coupled to a linking member and to a front axle of the lawn mower. The linking member is operably coupled between the front axle and a rear axle to convert linear movement of the linking member into a height adjustment of a blade housing of the lawn mower. The second pivot member may be operably coupled to the linking member and to the rear axle. The adjusting member is operably coupled to the linking member between the first pivot member and the second pivot member to cause the linear movement of the linking member.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a perspective view of a walk-behind lawn mower having a cutting height adjustment assembly according to an example embodiment;
FIG. 2 illustrates a side perspective view of the walk-behind lawn mower with some housing portions removed to better show the cutting height adjustment assembly according to an example embodiment;
FIG. 3 illustrates a top perspective view of the cutting height adjustment assembly in accordance with an example embodiment;
FIG. 4 illustrates an isolation view of components of the cutting height adjustment assembly in accordance with an example embodiment;
FIG. 5, which includes FIGS. 5A and 5B, illustrates an isolation view of pivot members of the cutting height adjustment assembly in accordance with an example embodiment;
FIG. 6 illustrates an exploded view of an adjustment member of an example embodiment;

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

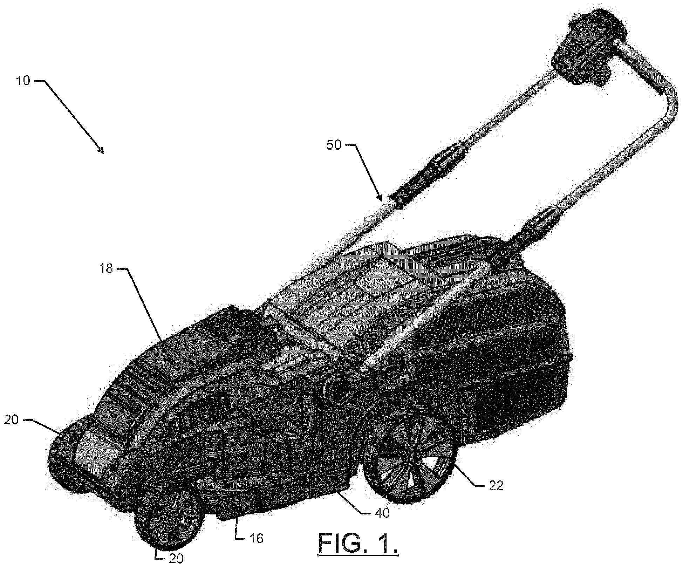

FIG. 1 illustrates a perspective view of a walk-behind lawn mower 10 of an example embodiment. An operator may be located at an operator location behind the lawn mower 10. The lawn mower 10 of FIG. 1 includes a blade housing 16 that may house a rotatable cutting blade (not shown). The cutting blade may be suspended above the ground at the end of a rotatable shaft (e.g., a drive shaft - again not shown in FIG. 1) that is turned responsive to operation of a motor 18, such as a gasoline powered engine or an electric motor. Operation of the motor 18 may be initiated by a recoil starter via pulling of a recoil starter handle by the operator. However, in other embodiments, the motor 18 may alternatively be started via a key, switch, electronic ignition or other similar device. In the example of FIG. 1, the lawn mower 10 is an electric powered mower, and thus, an electronic ignition, switch, and/or the like may be expected to provide for starting of the motor 18.

The lawn mower 10 may include a mobility assembly on which a substantial portion of the weight of the lawn mower 10 may rest when the lawn mower 10 is stationary. The mobility assembly may also provide for movement of the lawn mower 10. In some cases, the mobility assembly may be driven via power from the motor 18 that may be selectively provided to ground engaging wheels, which make up the mobility assembly. However, in other cases, the ground engaging wheels may not be powered and may move responsive to a push force being exerted by the operator.

In some examples, the ground engaging wheels are adjustable in their respective heights relative to the blade housing 16. Adjusting the height of the front wheels 20 and/or the back wheels 22 relative to the blade housing 16 is employed in order to provide a level cut and/or to adjust the height of the cutting blade. In some embodiments, a cutting height adjustment assembly 40 is provided to interface with the front wheels 20 and/or the back wheels 22 to adjust their respective heights relative to the blade housing 16. Moreover, in an example embodiment, the cutting height adjustment assembly 40 is operated with one hand in order to simultaneously adjust a position of the blade housing 16 relative to the front wheels 20 and the back wheels 22 as described in greater detail below.

Rotation of the cutting blade (e.g., in a plane substantially parallel to the ground or with a small blade inclination (e.g., 1 to 2°) may generate grass clippings, and/or other debris that may be ejected from the blade housing 16. In some cases, the clippings/debris are ejected from a side or rear of the blade housing 16. Some lawn mowers may employ a collector to collect discharged clippings/debris, while others may simply eject the clippings/debris onto the ground adjacent to the lawn mower 10.

In an example embodiment, the lawn mower 10 further include a handle assembly 50. The handle assembly 50 include one or more handle members that extend generally rearward and upward from a rear portion of the blade housing 16. The handle assembly 50 is used to provide propulsion and/or steering control for the lawn mower 10.

In an example embodiment, the blade housing 16 and the handle assembly 50 are made of substantially the same or similar materials. For example, the blade housing 16 and the handle bracket could each be made of steel, composite materials, plastics or other sufficiently rigid and strong materials. The blade housing 16 and/or other portions of the lawn mower 10 that form a framework or structural platform upon which the components of the lawn mower 10 are assembled may be stamped, molded, welded, secured or otherwise assembled together to define a rugged and durable structure.

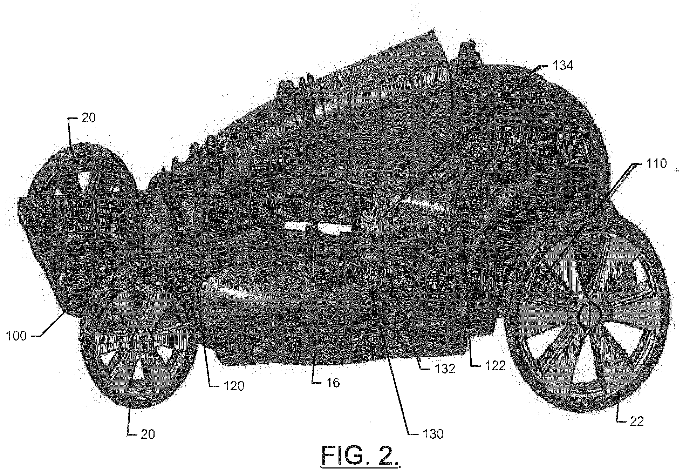

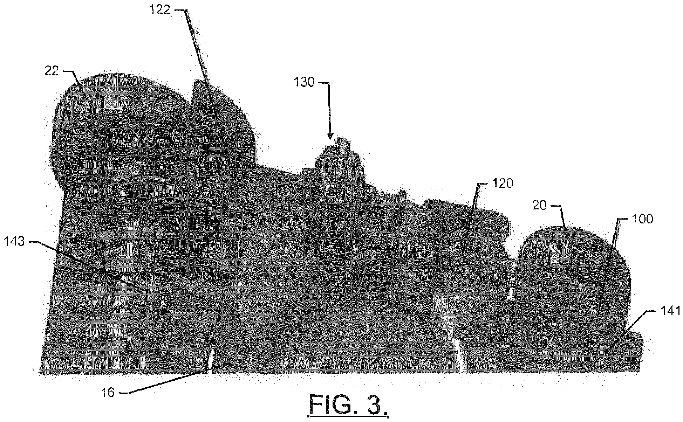

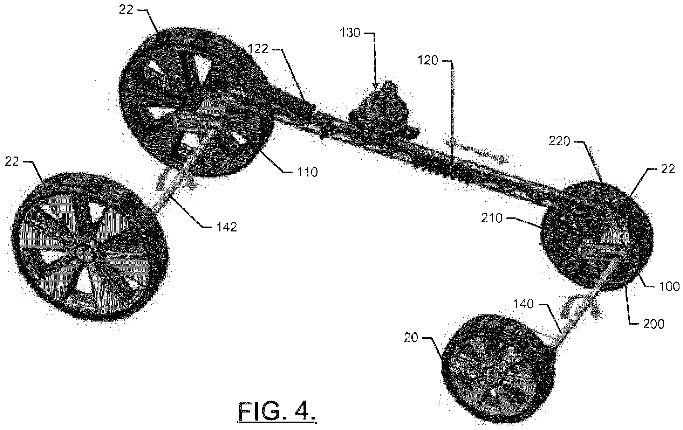

FIG. 2 illustrates a side, perspective view of the lawn mower 10 of one example with portions of a motor housing that house the motor 18 removed to provide a better view of various components of the cutting height adjustment assembly 40. FIG. 3 illustrates a top, perspective view to show an alternative perspective. FIG. 4 illustrates components of the cutting height adjustment assembly 40 in isolation. As shown in FIGS. 2-4, the cutting height adjustment assembly 40 include a first pivot member 100 a second pivot member 110, a linking member 120 and an adjustment member 130. The first pivot member 100 and the second pivot member 110 are each pivotally coupled to axles that rotate within fixed locations relative to the blade housing 16 at respective forward and rearward locations. In this regard, for example, a front axle 140 may pass through a forward channel 141 and a rear axle 142 pass through a rear channel 143 formed in a portion of the chassis of the lawn mower 10 (which chassis may be integrally or separately formed with the blade housing 16). The corresponding front and rear axles are be operably coupled to the first pivot member 100 and the second pivot member 110, respectively, to define a pivot point about which the first pivot member 100 and the second pivot member 110, respectively, pivot when the cutting height adjustment assembly 40 is operated.

In an example embodiment, one of the front wheels 20 (e.g., the left front wheel in this example) is operably coupled to the first pivot member 100 and the first pivot member 100 is operably coupled to the front axle (e.g., at a pivot point of the first pivot member 100). Similarly, one of the rear wheels 22 (e.g., the left rear wheel in this example) is operably coupled to the second pivot member 110 and the second pivot member 110 is operably coupled to the rear axle (e.g., at a pivot point of the second pivot member 110). The first and second pivot members 100 and 110 are also each operably coupled to the linking member 120. For example, opposing ends of the linking member 120 may be pivotally attached to the first pivot member 100 (e.g., at a front end of the linking member 120) and the second pivot member 110 (e.g., at a rear end of the linking member 120). Meanwhile, the adjustment member 130 may be positioned at some point between the front and rear ends of the linking member 120, and the adjustment member 130 is selectively operated to cause the first and second pivot members 100 and 110 to pivot simultaneously with rotational movement of the adjustment member 130.

Although not required, some example embodiments include a biasing member 122 (e.g., a spring) that is provided to bias the linking member 120 in one position or another. In the example of FIGS. 2-4, the biasing member 122 is provided to exert a spring force on the linking member 120 to draw the linking member 120 rearward. In this example, the rearward direction raise the height of the blade housing 16 relative to the ground and thus the rearward direction may correspondingly raise the cutting height. Since gravity tend to otherwise draw the blade housing 16 downward, the biasing member 122 may be provided to ensure that it is not significantly harder to adjust cutting height in one direction (e.g., upward) due to having to overcome gravity, while it is easier to adjust cutting height in the opposite direction (e.g., downward) due to the assistance produced by gravitational forces.

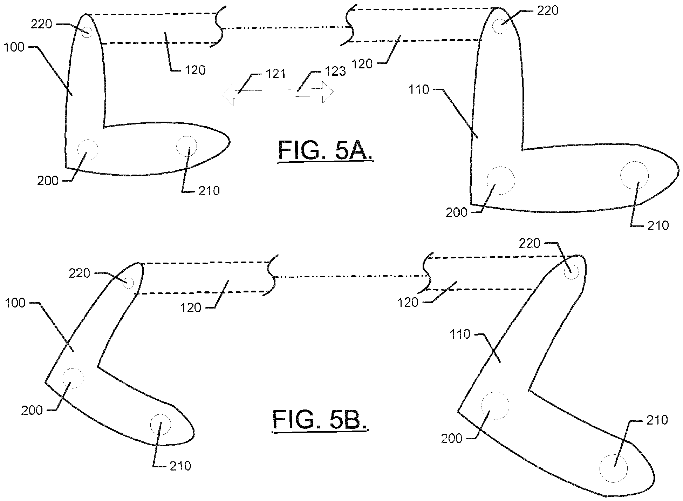

FIG. 5, which includes FIGS. 5A and 5B, illustrates operation of the first and second pivot members 100 and 110 responsive to motion of the linking member 120 to facilitate explanation of an example embodiment. In this regard, as can be seen from FIGS. 5A and 5B, the first and second pivot members 100 and 110 may include a number of flexible or pivotal connections to other members as described above. As shown in FIG. 4, the first and second pivot members 100 and 110 may be solid components that are fixed to the axles (e.g., by clip on). The forces thereat are therefore directly transferred to the corresponding axle which is rotatably fixed in the cutting deck. The V - shape of the first and second pivot members 100 and 110 (or spacers) may be useful to transfer the longitudinal direction of the rod link into a rotation. In this regard, a first pivot joint 200 is formed between the front axle and the first pivot member 100 and similarly between the rear axle and the second pivot member 110. A second pivot joint 210 is formed between the front wheel (e.g., left front wheel) and the first pivot member 100 and similarly between the rear wheel (e.g., left rear wheel) and the second pivot member 110. A third pivot joint 220 is formed between the linking member 120 and each of the first and second pivot members 100 and 110.

When, as shown in FIG. 5A, the linking member 120 is in a first position (e.g., moved forward), the first and second pivot members 100 and 110 are oriented such that the second pivot joints 210 are at a particular elevation shown. Since the front axle and rear axle are each rotatable, but otherwise fixed within the forward channel 140 and rear channel 142, respectively, when the linking member 120 is drawn rearward (as shown in FIG. 5B), the third pivot joints 220 are drawn rearward to pivot the first and second pivot members 100 and 110 about the first pivot joints 200. This pivoting causes the corresponding change in the elevation of the second pivot joints 210 so that the height of the blade housing 16 (e.g., the cutting deck) is raised. Accordingly, operation of the adjustment member 130 cause motion of the linking member 120 either in a forward direction (shown by arrow 121) or rearward direction (shown by arrow 123). Motion of the linking member 120 cause corresponding rotation of the first and second pivot members 100 and 110 to change the orientation thereof and change the elevation of the cutting deck.

Of note, as mentioned above, the first and second pivot members 100 and 110 of FIGS. 5A and 5B are generally shown to have a V-shape. As such, for example, the first and second pivot members 100 and 110 could be formed as a plate, bracket, cam or other such rotatable member to which various components may be pivotally attached as described above. However, in some cases, the first and second pivot members 100 and 110 may merely be formed as a portion of a bent axle that includes an additional extension portion which provides the third pivot joints 220. Meanwhile, the wheels on the opposite side of the lawn mower 10 from the first and second pivot members 100 and 110 (e.g., the right side wheels in this example) may simply have the bent axles described above or a component similar to the first and second pivot members 100 and 110 except that the extension portion on which the third pivot joints 220 would be provided can be omitted.

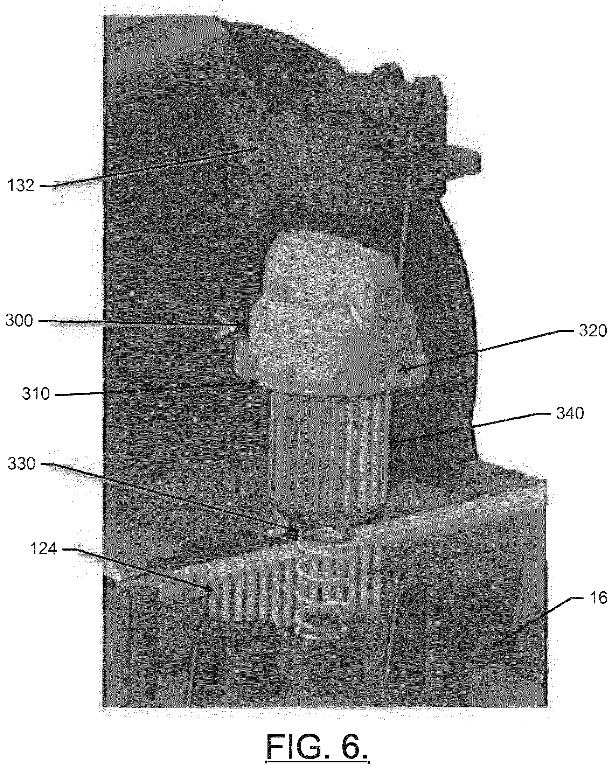

FIG. 6 illustrates an exploded perspective view of the adjustment member 130 of an example embodiment along with the linking member 120. In an example embodiment, the linking member 120 include an interface portion 124 that include a plurality of teeth (e.g., gear teeth), ribs or ridges that are disposed extending parallel and adjacent to each other on one side of the linking member 120. The interface portion 124 interface or interact with the adjusting member 130 to allow the adjusting member 130 to be moved (e.g., rotated) to change a position of the linking member 120. In this regard, for example, the adjusting member 130 further include a guiding member 132 and a knob 134 that are operable in the manner described in greater detail below to adjust the position of the linking member 120.

The knob 134 include a rotatable cap 300, which is shaped to allow the operator to grip the cap 300. In an example embodiment, the cap 300 include a skirt 310 that includes a plurality of projections 320 that extend upward substantially parallel to the direction of longitudinal extension of the knob 134. The projections 320 are capable of being received in receiving holes disposed around a bottom periphery of the guiding member 132. Moreover, a locking spring 330 is provided between the blade housing 16 (or a portion thereof) and the knob 134 to bias the knob 134 away from the blade housing 16. Thus, when the knob 134 is not being pushed down by the operator to disengage the projections 320 from the receiving holes, the projections 320 extend into the receiving holes and lock the knob 134 in place.

The knob 134 also include a cylindrically shaped base portion 340. The base portion 340 have a plurality of teeth (e.g., gear teeth), ribs or ridges arrayed around the external periphery thereof. The ribs or ridges extend parallel to the direction of longitudinal extension of the knob 134 and are in contact with the interface portion 124 of the linking member 120. Moreover, rotation of the knob 134 cause corresponding rotation of the base portion 340 so that the gear teeth of the base portion 340 mesh with or otherwise engage the gear teeth of the interface portion 124. However, when the knob 134 is locked (e.g., via the projections 320 engaging the receiving holes of the guidance member 132), the interface portion 124 and the base portion are effectively engaged to lock the position of the linking member 120. Thus, the locking spring 330 must be overcome by pushing the knob 134 downward so that the knob 134 can be rotated. Then, rotation of the knob 134 causes corresponding forward or rearward motion of the linking member 120 to correspondingly adjust the cutting height.

In an example embodiment, the knob 134 convert a rotational input into linear motion that is translated into a pivoting motion to adjust the cutting height. As such, for example, after a linear input in a downward direction unlocks the adjusting member 130, the adjusting member 130 is rotated about a vertical axis to provide an input to the linking member 120 to move the linking member 120 in a forward or rearward linear direction. Responsive to movement of the linking member 120, a pivoting of the first and second pivot members 100 and 110 is caused, which correspondingly adjusts the cutting height.

Referring again to FIG. 1, it can be appreciated that the example adjustment member 130 structures of FIGS. 2-6 and FIGS. 7-10 could be combined in a single mower. Thus, it should be appreciated that the linking member 120 may include two separate instances of the interface portion 124, and those two separate instances may be on opposite sides of the linking members 120. This provide the user with the option to use whichever method is preferred by the user. This also means that the same parts can be produced and various different models can all be built from the same basic parts. Accordingly, it may be an easy and cheap solution to customize the product for different customers.

Accordingly, a lawn mower of an example embodiment include a blade housing configured to house at least one blade, a motor configured to selectively rotate the at least one blade within the blade housing, a mobility assembly including front wheels supported at least in part via a front axle and rear wheels supported at least in part via a rear axle, and a cutting height adjustment assembly configured to convert linear movement of a linking member that is operably coupled between the front axle and the rear axle into a height adjustment of the blade housing.

In some embodiments, the features described above may be augmented or modified, or additional features may be added. These augmentations, modifications and additions may be optional and may be provided in any combination. Thus, although some example modifications, augmentations and additions are listed below, it should be appreciated that any of the modifications, augmentations and additions could be implemented individually or in combination with one or more, or even all of the other modifications, augmentations and additions that are listed. In some examples, the adjusting member include a knob and a guiding member that holds the knob proximate to the interface portion. The guidance member may be configured to selectively lock a position of the knob. In an example embodiment, the knob include a rotatable cap having a skirt with one or more projections configured to engage the guiding member to lock the knob relative to the guiding member. A locking spring may bias the projections to engage the guiding member. In some cases, the adjusting member may include a linear operator and a guiding member that holds the linear operator proximate to the interface portion. The linear operator may be configured to selectively engage the interface portion based on linear movement of the linear operator. In some examples, linear movement of the linear operator to unlock the adjusting member is provided in a transverse direction to enable movement of the linking member along a longitudinal direction substantially perpendicular thereto. In an example embodiment, a handle is provided proximate to the linear operator to enable an operator to adjust cutting height by pulling or pushing the handle while simultaneously actuating the linear operator. In some cases, the linking member may be biased in either a forward or rearward direction by a biasing member. In some examples, the adjusting member is biased to have locked engagement with the linking member.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the limits of the appended claims.

## Claims

1. A lawn mower (10) comprising:
a blade housing (16) configured to house at least one blade;
a motor (18) configured to selectively rotate the at least one blade within the blade housing (16);
a mobility assembly including front wheels (20) supported at least in part via a front axle and rear wheels (22) supported at least in part via a rear axle; and
a cutting height adjustment assembly (40) configured to convert linear movement of a linking member (120) that is operably coupled between the front axle and the rear axle into a height adjustment of the blade housing (16), wherein the cutting height adjustment assembly (40) comprises:
a first pivot member (100) operably coupled to the linking member (120) and to the front axle;
a second pivot member (110) operably coupled to the linking member (120) and to the rear axle;
an adjusting member (130) operably coupled to the linking member (120) between the first pivot member (100) and the second pivot member (110), **characterized in that**
the adjusting member (130) is rotated about a vertical axis to move the linking member (120) linearly in a forward or rearward direction and correspondingly pivot the first pivot member (100) and the second pivot member (110) about the front axle and rear axle, respectively; wherein
the linking member (120) comprises a plurality of teeth, ridges or ribs disposed at an interface portion (124) along one side of the linking member (120).

2. The lawn mower (10) of claim 1, wherein the adjusting member (130) comprises a knob (134) and a guiding member (132), the guiding member (132) holding the knob (134) proximate to the interface portion (124), and wherein the guidance member (132) is configured to selectively lock a position of the knob (134).

3. The lawn mower (10) of claim 2, wherein the knob (134) comprises a rotatable cap (300) having a skirt (310) with one or more projections (320) configured to engage the guiding member (132) to lock the knob (134) relative to the guiding member (132), and wherein a locking spring (330) biases the projections (320) to engage the guiding member (132).

4. The lawn mower (10) of any preceding claim, wherein the linking member (120) is biased in either a forward or rearward direction by a biasing member (122).

5. The lawn mower (10) of any preceding claim, wherein the adjusting member (130) is biased to have locked engagement with the linking member (120).

6. The lawn mower (10) of claim 1, wherein two instances of the adjusting member (130) are provided to interface with one instance of the linking member (120), and wherein each of the two instances of the adjusting member (130) provides a different interface for adjusting cutting height via movement of the one instance of the linking member (120).

## Patentansprüche

1. Rasenmäher (10) umfassend:
ein Klingengehäuse (16), das dazu ausgestaltet ist, zumindest eine Klinge einzuhausen;
einen Motor (18), der dazu ausgestaltet ist, selektiv die zumindest eine Klinge innerhalb des Klingengehäuses (16) zu drehen;
eine Mobilitätsanordnung, die Vorderräder (20), die zumindest zum Teil über eine Vorderachse getragen werden, und Hinterräder (22), die zumindest zum Teil über eine Hinterachse getragen werden, beinhaltet; und
eine Schnitthöhen-Einstellanordnung (40), die dazu ausgestaltet ist, eine lineare Bewegung eines Anlenkungselements (120), das zwischen der Vorderachse und der Hinterachse wirksam gekoppelt ist, in eine Höheneinstellung des Klingengehäuses (16) umzuwandeln, wobei die Schnitthöhen-Einstellanordnung (40) umfasst:
ein erstes Schwenkelement (100), das wirksam mit dem Anlenkungselement (120) und mit der Vorderachse gekoppelt ist;
ein zweites Schwenkelement (110), das wirksam mit dem Anlenkungselement (120) und mit der Hinterachse gekoppelt ist;
ein Einstellelement (130), das mit dem Anlenkungselement (120) zwischen dem ersten Schwenkelement (100) und dem zweiten Schwenkelement (110) wirksam gekoppelt ist, **dadurch gekennzeichnet, dass** das Einstellelement (130) um eine vertikale Achse gedreht wird, um das Anlenkungselement (120) linear in eine Vorwärts- oder Rückwärtsrichtung zu bewegen und das erste Schwenkelement (100) und das zweite Schwenkelement (110) entsprechend jeweils um die Vorderachse und Hinterachse zu schwenken;
wobei das Anlenkungselement (120) eine Vielzahl von Zähnen, Wülsten oder Rippen umfasst, die an einem Schnittstellenabschnitt (124) entlang einer Seite des Anlenkungselements (120) angeordnet sind.

2. Rasenmäher (10) nach Anspruch 1, wobei das Einstellelement (130) einen Knopf (134) und ein Führungselement (132) umfasst, wobei das Führungselement (132) den Knopf (134) in der Nähe des Schnittstellenabschnitts (124) hält, und wobei das Führungselement (132) dazu ausgestaltet ist, eine Position des Knopfs (134) selektiv zu sichern.

3. Rasenmäher (10) nach Anspruch 2, wobei der Knopf (134) eine drehbare Kappe (300) mit einer Schürze (310) mit einem oder mehreren Vorsprüngen (320) umfasst, die dazu ausgestaltet sind, mit dem Führungselement (132) in Eingriff zu gelangen, um den Knopf (134) relativ zu dem Führungselement (132) zu sichern, und wobei eine Sicherungsfeder (330) die Vorsprünge (320) vorspannt, so dass sie in das Führungselement (132) eingreifen.

4. Rasenmäher (10) nach einem der vorhergehenden Ansprüche, wobei das Anlenkungselement (120) durch ein Vorspannungselement (122) entweder in einer Vorwärts- oder in einer Rückwärtsrichtung vorgespannt wird.

5. Rasenmäher (10) nach einem der vorhergehenden Ansprüche, wobei das Einstellelement (130) so vorgespannt ist, dass es in gesichertem Eingriff mit dem Anlenkungselement (120) steht.

6. Rasenmäher (10) nach Anspruch 1, wobei zwei Ausführungen des Einstellelements (130) vorgesehen sind, um mit einer Ausführung des Anlenkungselements (120) eine Schnittstelle zu bilden, und wobei jede der zwei Ausführungen des Einstellelements (130) eine unterschiedliche Schnittstelle zum Einstellen der Schnitthöhe über die Bewegung der einen Ausführung des Anlenkungselements (120) bereitstellt.

## Revendications

1. Tondeuse à gazon (10) comprenant :
un boîtier de lame (16) configuré pour recevoir au moins une lame ;
un moteur (18) configuré pour faire tourner sélectivement l'au moins une lame dans le boîtier de lame (16) ;
un ensemble de mobilité comportant des roues avant (20) supportées au moins en partie par l'intermédiaire d'un essieu avant et des roues arrière (22) supportées au moins en partie par l'intermédiaire d'un essieu arrière ; et
un ensemble de réglage de hauteur de coupe (40) configuré pour convertir un mouvement linéaire d'un élément de liaison (120) qui est couplé de manière fonctionnelle entre l'essieu avant et l'essieu arrière en un réglage de hauteur du boîtier de lame (16), où l'ensemble de réglage de hauteur de coupe (40) comprend :
un premier élément pivotant (100) couplé de manière fonctionnelle à l'élément de liaison (120) et à l'essieu avant ;
un deuxième élément pivotant (110) couplé de manière fonctionnelle à l'élément de liaison (120) et à l'essieu arrière ;
un élément de réglage (130) couplé de manière fonctionnelle à l'élément de liaison (120) entre le premier élément pivotant (100) et le deuxième élément pivotant (110), **caractérisée en ce que**
l'élément de réglage (130) est mis en rotation autour d'un axe vertical pour déplacer l'élément de liaison (120) linéairement dans une direction vers l'avant ou vers l'arrière et faire pivoter en conséquence le premier élément pivotant (100) et le deuxième élément pivotant (110) autour de l'essieu avant et de l'essieu arrière, respectivement ; dans laquelle
l'élément de liaison (120) comprend une pluralité de dents, de crêtes ou de nervures disposées au niveau d'une partie d'interface (124) le long d'un côté de l'élément de liaison (120).

2. Tondeuse à gazon (10) de la revendication 1, dans laquelle l'élément de réglage (130) comprend un bouton (134) et un élément de guidage (132), l'élément de guidage (132) maintenant le bouton (134) à proximité de la partie d'interface (124), et dans laquelle l'élément de guidage (132) est configuré pour verrouiller sélectivement une position du bouton (134).

3. Tondeuse à gazon (10) de la revendication 2, dans laquelle le bouton (134) comprend un capuchon rotatif (300) ayant une jupe (310) avec une ou plusieurs saillie(s) (320) configurée(s) pour s'engager avec l'élément de guidage (132) pour verrouiller le bouton (134) par rapport à l'élément de guidage (132), et dans laquelle un ressort de verrouillage (330) sollicite les saillies (320) pour s'engager avec l'élément de guidage (132).

4. Tondeuse à gazon (10) de l'une des revendications précédentes, dans laquelle l'élément de liaison (120) est sollicité dans une direction vers l'avant ou vers l'arrière par un élément de sollicitation (122).

5. Tondeuse à gazon (10) de l'une des revendications précédentes, dans laquelle l'élément de réglage (130) est sollicité pour avoir un engagement verrouillé avec l'élément de liaison (120).

6. Tondeuse à gazon (10) de la revendication 1, dans laquelle deux instances de l'élément de réglage (130) sont fournies pour faire interface avec une instance de l'élément de liaison (120), et dans laquelle chacune des deux instances de l'élément de réglage (130) fournit une interface différente pour régler la hauteur de coupe par le mouvement de l'instance de l'élément de liaison (120).
